# EUROPÄISCHE PATENTSCHRIFT

(11) **EP 1 773 638 B1**
(45) Veröffentlichungstag und Bekanntmachung des Hinweises auf die Patenterteilung: **12.09.2018**
(21) Anmeldenummer: 05750224.7
(22) Anmeldetag: 04.06.2005
(51) Int. Cl.: B60T 17/00, D01D 5/253

(54) **FADEN FÜR AKUSTISCHES DÄMMMATERIAL, INSBESONDERE FÜR GERÄUSCHDÄMPFER IN DRUCKLUFTEINRICHTUNGEN**
FIBRE FOR AN ACOUSTIC INSULATING MATERIAL, ESPECIALLY FOR SOUND DAMPERS IN COMPRESSED AIR DEVICES
FIBRE POUR MATERIAU ISOLANT ACOUSTIQUE, EN PARTICULIER POUR DES ATTENUATEURS SONORES DANS DES DISPOSITIFS A AIR COMPRIME

(30) Priorität: 23.07.2004 DE 102004036030
(43) Veröffentlichungstag der Anmeldung: 18.04.2007
(73) Patentinhaber: WABCO GmbH, 30453 Hannover (DE)
(72) Erfinder: HARTING, Hendrik, 31785 Hameln (DE)
(74) Vertreter: Günther, Constantin
(86) Internationale Anmeldenummer: PCT/EP2005/006030
(87) Internationale Veröffentlichungsnummer: WO 2006/010401

(56) Entgegenhaltungen:
- EP-A- 0 443 431
- WO-A-02/00973
- DE-A1- 4 237 630
- DE-A1- 10 248 183
- US-A- 5 277 976
- PATENT ABSTRACTS OF JAPAN Bd. 014, Nr. 080 (C-0689), 15. Februar 1990 (1990-02-15) & JP 01 298210 A (TEIJIN LTD), 1. Dezember 1989 (1989-12-01)
- PATENT ABSTRACTS OF JAPAN Bd. 018, Nr. 068 (C-1161), 4. Februar 1994 (1994-02-04) & JP 05 279911 A (KURARAY CO LTD), 26. Oktober 1993 (1993-10-26)

## Beschreibung

Die Erfindung betrifft einen Faden für akustisches Dämmmaterial, insbesondere für Geräuschdämpfer in Drucklufteinrichtungen.

Es ist beispielsweise aus der DE 10248183 A1 bekannt, in Geräuschdämpfern von Drucklufteinrichtungen Dämmstoffe in Form einer Gestrickrolle zu verwenden. Eine solche Gestrickrolle wird aus einem schlauchförmigen, auf einer Rundstrickmaschine hergestellten Gestrick von geketteten thermoplastischen Fäden mit z. B. rechteckförmigem Querschnitt hergestellt, indem ein Gestrickschlauch in einer vorbestimmten Länge abgelängt und an seinen Schnittflächen so verschweißt wird, dass ein rechteckförmiger Schlauchabschnitt entsteht. Dieser rechteckförmige Schlauchabschnitt wird dann zu einer Gestrickrolle gerollt. Die Gestrickrolle wird dann in einen zur Atmosphäre führenden Verbindungsschlauch eingeschoben. Abgesehen davon, dass ein zusätzlicher Verbindungsschlauch eingesetzt werden muss, der viel Bauraum benötigt, und für einen ausreichenden Halt der Gestrickrolle im Verbindungsschlauch zusätzliche Maßnahmen getroffen werden müssen, ist auch die Geräuschdämpfung nicht zufriedenstellend.

Durch die DE 42 37 630 A1 ist eine Druckluft-Entlüftungseinrichtung bekannt, die einen von einem Einlass eines Gehäuses über geräuschdämpfende Mittel zu einem Aus lass geführten Hauptluftweg und einem parallel zu diesem vorgesehenen Hilfsluftweg aufweist, der aus einem vom Einlass ausgehenden ersten Teilkanal und einem vom Auslass gebildeten oder zum Auslass führenden zweiten Teilkanal besteht. Die beiden Teilkanäle sind nicht mit den geräuschdämpfenden Mitteln gefüllt. Die beiden Teilkanäle sind miteinander über die geräuschdämpfenden Mittel verbunden. Die beiden Teilkanäle und der die beiden Teilkanäle verbindende Teil der geräuschdämpfenden Mittel sind so angeordnet, dass dieser Teil der geräuschdämpfenden Mittel bei der Beaufschlagung mit einem Staudruck eine direkte Verbindung zwischen den beiden Teilkanälen freigibt. Die geräuschdämpfenden Mittel werden von einem Filtergestrick gebildet, das aus einem strumpfartigen Gewebeteil aus Kunststoff-Flachdraht besteht, welches zu einer Rolle gewickelt ist. Das Gehäuse setzt sich aus einem topfförmig ausgebildeten Gehäuseteil und einem auf dieses aufgeschnappten, als Deckel ausgebildeten Gehäuseteil zusammen. Nachteilig ist bei dieser als Geräuschdämpfer dienenden Druckluft-Entlüftungseinrichtung, dass die Gefahr von Undichtigkeiten an den Fügestellen der Gehäuseteile besteht, die einen hohen Geräuschpegel verursachen. Außerdem baut die bekannte Einrichtung relativ groß und benötigt daher viel Einbauraum.

Die Druckschrift WO02/00973A1 zeigt einen profilierten synthetischen Faden und ein Verfahren zur Herstellung des Fadens. Der Faden weist mindestens eine Kammer oder einen Hohlraum innerhalb des Fadens auf, um die Oberfläche des Fadens zu erhöhen. Damit kann eine verbesserte Absorber-Wirkung des Fadens in Bezug auf Geräusche und Flüssigkeiten, z.B. Wasser oder Öl, erzielt werden. Die Kammer bzw. der Hohlraum des Fadens weist ein ganz spezielle Ausformung auf, um die geräuschdämpfenden Eigenschaften zu ermöglichen. Weiterhin wird die Anwendung des Fadens in einer Matte zur Geräuschdämpfung und allgemein zur Geräuschdämpfung im Automobil-Sektor genannt, aber nicht näher ausgeführt.

Die Druckschrift JP01298210A beschreibt ein Hohlgarn aus Polyester mit einer speziellen Bauschigkeit und einem speziellen Soft-Touch sowie ein Verfahren zu Herstellung desselben. Es werden spezifische Angaben zu dem Herstellungsprozess und den Abmessungen des Fadens und des Hohlraums gemacht. Das Hohlgarn findet Anwendung in gewebten und gestrickten Waren, die Gleichmäßigkeit und weichen Griff aufweisen.

Die Druckschrift US5277976 beschreibt eine orientierte, nichtkreisförmige Faser, ein Faservlies daraus sowie ein Verfahren zur Herstellung der Faser. Es werden Angaben zu der spezifischen Ausgestaltung der Faser in Bezug auf das Verhältnis der Querschnittsfläche zum Quadrat des Durchmessers der Faser, usw. definiert sowie zu den Abmessungen der Düsen bei der Herstellung der Faser gemacht. Die Faser oder das Faservlies kann als Absorptionsmittel für Flüssigkeiten verwendet werden.

Die Druckschrift EP0443431A2 betrifft eine Kohlenstoff-Hohlfaser mit einer Querschnittsfläche in Form eines Rings, der nicht ganz geschlossen ist. Sie werden hergestellt durch spinnen einer Polyacrylnitril-Schmelze durch einen Spinnkopf mit C-förmigen Düsenöffnungen, Verstrecken, Oxidieren und Carbonisieren der Fasern. Die Kohlenstoff-Hohlfasern sind zur Herstellung von Hochleistungsverbundwerkstoffen geeignet.

Die Druckschrift JP05279911A beschreibt die Herstellung von Hohl-Fasern für leichtgewichtige Gewebe und guten Eigenschaften in Wärmebeständigkeit sowie Wasser-Absorption. Die Hohlfasern weisen exzellente Anti-Fussel-Eigenschaften auf.

Die Aufgabe der vorliegenden Erfindung besteht darin, einen Faden für akustisches Dämmmaterial, insbesondere für Geräuschdämpfer von Drucklufteinrichtungen so auszubilden, dass das aus dem Faden hergestellte akustische Dämmmaterial, insbesondere ein aus dem Faden hergestellter Geräuschdämpfer in Form einer Gestrickrolle für Drucklufteinrichtungen eine verbesserte Geräusch- bzw. Schalldämpfung bewirkt.

Diese Aufgabe wird durch die Erfindung gemäß Anspruch 1 gelöst.

Vorteilhafte und zweckmäßige Weiterbildungen und Ausgestaltungen der Erfindung sind in den Unteransprüchen angegeben.

Die Erfindung schlägt ein Dämmmaterial vor, das aus einem aus Fäden hergestellten Gestrickschlauch besteht, der zu einer Gestrickrolle gerollt ist, wobei erfindungsgemäß Kunststoff-Fäden mit gegenüber bekannten Fadenausbildungen vergrößerter Oberfläche verwendet werden, indem die Fäden eine von der runden Außenform abweichende geometrische Gestaltung der Querschnitts-Außenkontur aufweisen.

Die Vergrößerung der Oberfläche des Fadens wird gemäß vorteilhafter Ausgestaltungen der Erfindung durch regelmäßig oder unregelmäßig profilierte Fadenquerschnittskonturen, insbesondere durch einen kreuzförmigen oder sternförmigen Fadenquerschnitt erzielt.

Eine Vergrößerung der Oberfläche ist gemäß einer Weiterbildung auch erreichbar durch eine eingeprägte, regelmäßige oder unregelmäßige Struktur oder Profilierung der Oberfläche des Fadens in Fadenlängsrichtung. Beide Maßnahmen zur Oberflächenvergrößerung können kombiniert werden.

Es zeigte sich überraschenderweise, dass mit einem Geräuschdämpfer, bei dem Dämmstoff in Form einer Gestrickrolle mit einem erfindungsgemäßen Faden mit vergrößerter Oberfläche eingesetzt wird, eine beachtlich höhere Geräuschdämpfung erzielt wird als bei Verwendung herkömmlicher Gestrickrollen. Der Gesichtspunkt "Fadenoberfläche" wurde bisher nicht beachtet. Durch die Erfindung wird eine bessere Absorption des Luftschalls erzielt. Die Schallenergie wird in Dissipationsenergie umgewandelt. Der Wirkungsgrad wird durch die größere Oberfläche des Fadens erhöht. Die verbesserte Geräuschdämpfung ermöglicht die Verwendung kleinerer Geräuschdämpfer, so dass eine Kostenreduzierung erreichbar ist und weniger Bauraum benötigt wird. Herkömmliche Gestrickrollen in vorhandenen Geräuschdämpfern können durch Gestrickrollen mit dem erfindungsgemäß ausgebildeten Faden ersetzt werden.

Die Erfindung soll nachfolgend anhand der beigefügten Zeichnung, in der Ausführungsbeispiele des erfindungsgemäßen Fadens schematisch dargestellt sind, näher erläutert werden.

Es zeigen:
- Fig. 1: schematisch einen Faden mit kreuzförmigem Querschnitt,
- Fig. 2: einen Faden mit sternförmigem Querschnitt,
- Fig. 3: einen Faden mit einem ungleichmäßigen sternförmigen Querschnitt,
- Fig. 4: einen Faden mit einer Oberflächenprofilierung in Längsrichtung in Form aufeinander folgender Verdickungen und Verdünnungen des Querschnitts,
- Fig. 5: den Faden nach Figur 1 mit zusätzlicher Längsprofilierung und
- Fig. 6: den Faden nach Figur 2 mit zusätzlicher Längsprofilierung.

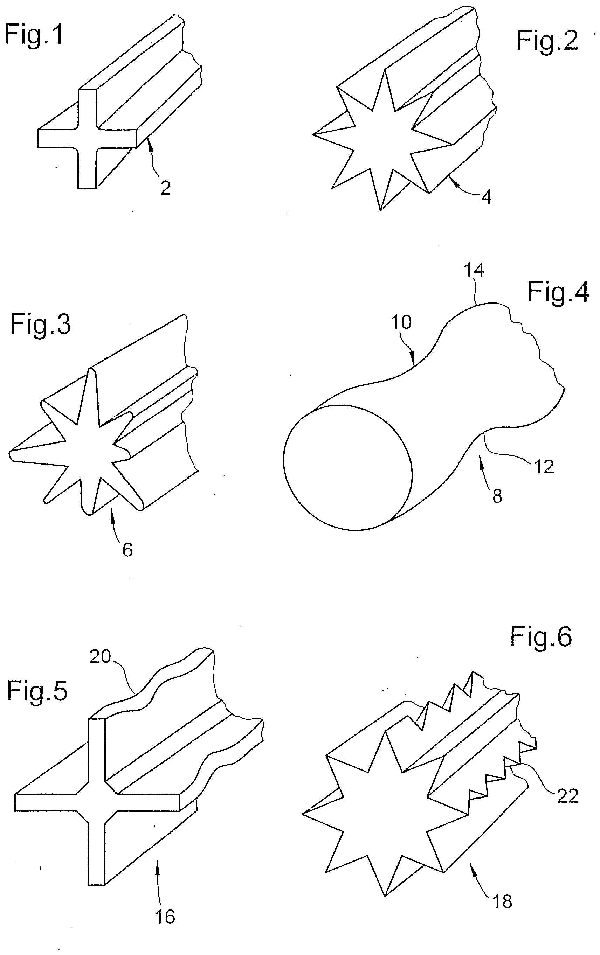

Die Figur 1 der Zeichnung zeigt einen Faden 2 mit einem kreuzförmigen Querschnitt, die Figur 2 einen Faden 4 mit sternförmigem Querschnitt und die Figur 3 einen Faden 6 mit ungleichmäßig sternförmig ausgebildetem Querschnitt.

Solche Querschnittsformen, wie sie in den Figuren 1 bis 3 dargestellt sind, lassen sich leicht durch die bekannten Strangziehverfahren aus thermoplastischem Kunststoffmaterial herstellen.

Die Figur 4 zeigt einen Faden 8 mit beispielsweise rundem Querschnitt, jedoch mit einer Oberflächenprofilierung 10 in Längsrichtung in Form von aufeinander folgenden Verdünnungen 12 und Verdickungen 14 des Querschnitts, die gleichmäßig oder auch ungleichmäßig ausgebildet sein können. Auch durch diese Maßnahme ist eine Oberflächenvergrößerung des Fadens erzielbar.

Die Figuren 5 und 6 zeigen Fäden 16,18 nach den Figuren 1 und 2, die zusätzlich eine Längsprofilierung aufweisen. Diese Längsprofilierung kann beispielsweise eine wellenförmige Profilierung 20, wie dies für den Faden nach Figur 1 dargestellt, oder eine zickzackförmige Profilierung 22 sein, wie dies für den Faden nach Figur 2 dargestellt ist.

Als Material für den Faden 2, 4, 6, 8, 16, 18 ist Polypropylen, Polyethylen und anderer thermoplastischer Kunststoff geeignet. Die Oberflächenprofilierung in Längsrichtung des Fadens kann durch geeignete Werkzeuge nach dem Austreten des Fadenstranges aus der Düse des Werkzeugs in die Oberfläche des Fadens eingedrückt bzw. eingeprägt werden.

## Patentansprüche

1. Geräuschdämpfer in Drucklufteinrichtungen enthaltend einen Faden für akustisches Dämmmaterial aus thermoplastischem Kunststoff, **dadurch gekennzeichnet, dass**
der Faden (2,4,6,8,16,18) eine in seine Oberfläche eingeformte oder eingeprägte, die Oberfläche bzw. die spezifische Oberfläche erhöhende Struktur oder Profilierung aufweist.

2. Geräuschdämpfer nach Anspruch 1, **dadurch gekennzeichnet, dass** der Faden (2,4,6,8,16,18) zu einem Geflecht- oder Gestrickschlauchstück verarbeitet ist, der zu einer Gestrickrolle gerollt das akustische Dämmmaterial bildet.

3. Geräuschdämpfer nach Anspruch 2, **dadurch gekennzeichnet, dass** die Enden des Geflecht- oder Gestrickschlauchstücks so verschweißt sind, dass ein etwa rechteckförmiger Schlauchabschnitt entsteht.

4. Geräuschdämpfer nach Anspruch 1, 2 oder 3, **dadurch gekennzeichnet, dass** der Faden (2) einen kreuzförmigen Querschnitt aufweist.

5. Geräuschdämpfer nach Anspruch 1, 2 oder 3, **dadurch gekennzeichnet, dass** der Faden (4) einen sternförmigen Querschnitt aufweist.

6. Geräuschdämpfer nach Anspruch 1, 2 oder 3, **dadurch gekennzeichnet, dass** der Faden einen ungleichmäßig sternförmig ausgebildeten Querschnitt aufweist.

7. Geräuschdämpfer nach Anspruch 1, 2 oder 3, **dadurch gekennzeichnet, dass** der Faden (8) mit einer Oberflächenprofilierung bzw. Oberflächenstruktur in Längsrichtung versehen ist.

8. Geräuschdämpfer nach Anspruch 7, **dadurch gekennzeichnet, dass** die Oberflächenprofilierung bzw. Oberflächenstruktur (10) in Form von aufeinander folgenden Verdünnungen (12) und Verdickungen (14) des Fadenquerschnittes ausgebildet ist.

9. Geräuschdämpfer nach Anspruch 8, **dadurch gekennzeichnet, dass** die Oberflächenprofilierung bzw. Oberflächenstruktur (10) gleichmäßig oder ungleichmäßig ausgebildet ist.

10. Geräuschdämpfer nach Anspruch 1, 2 oder 3, **dadurch gekennzeichnet, dass** der Faden (16,18) außer der profilierten Querschnittskontur eine zusätzliche Profilierung (20,22) in Längsrichtung (16) aufweist.

11. Geräuschdämpfer nach Anspruch 10, **dadurch gekennzeichnet, dass** die Längsprofilierung (20,22) wellenförmig oder zickzackförmig ausgebildet ist.

## Claims

1. Acoustic damper in compressed-air installations, containing a thread for an acoustic insulation material from a thermoplastic plastics material, **characterized in that** the thread (2, 4, 6, 8, 16, 18) has a structured feature or profiled feature that is moulded or embossed into the surface of said thread (2, 4, 6, 8, 16, 18) and increases the surface or the specific surface, respectively.

2. Acoustic damper according to Claim 1, **characterized in that** the thread (2, 4, 6, 8, 16, 18) is processed so as to form a tubular braided or knitted hose piece which, when rolled to form a rolled knitwear, forms the acoustic insulation material.

3. Acoustic damper according to Claim 2, **characterized in that** the ends of the tubular braided or knitted hose piece are welded such that an approximately rectangular hose portion is created.

4. Acoustic damper according to Claim 1, 2, or 3, **characterized in that** the thread (2) has a cruciform cross section.

5. Acoustic damper according to Claim 1, 2, or 3, **characterized in that** the thread (4) has a star-shaped cross section.

6. Acoustic damper according to Claim 1, 2, or 3, **characterized in that** the thread has a cross section that is configured in a non-uniform star-shaped manner.

7. Acoustic damper according to Claim 1, 2, or 3, **characterized in that** the thread (8) is provided with a surface profiled feature or a surface structured feature, respectively, in the longitudinal direction.

8. Acoustic damper according to Claim 7, **characterized in that** the surface profiled feature or the surface structured feature (10), respectively, is configured in the form of sequential thinnings (12) and thickenings (14) of the thread cross section.

9. Acoustic damper according to Claim 8, **characterized in that** the surface profiled feature or the surface structured feature (10), respectively, is configured so as to be uniform or non-uniform.

10. Acoustic damper according to Claim 1, 2, or 3, **characterized in that** the thread (16, 18), except for the profiled cross-sectional contour, has an additional profiled feature (20, 22) in the longitudinal direction (16).

11. Acoustic damper according to Claim 10, **characterized in that** the longitudinal profiled feature (20, 22) is configured in an undulating manner or a zigzag manner.

## Revendications

1. Atténuateur sonore dans des dispositifs à air comprimé contenant une fibre pour matériau isolant acoustique en matière plastique thermoplastique, **caractérisé en ce que** la fibre (2, 4, 6, 8, 16, 18) présente une structure ou un profilage façonné(e) ou imprimé(e) dans sa surface et augmentant la surface ou la surface spécifique.

2. Atténuateur sonore selon la revendication 1, **caractérisé en ce que** la fibre (2, 4, 6, 8, 16, 18) est traitée en une pièce de tuyau souple tressée ou tricotée, qui enroulée en un rouleau de tricot forme le matériau isolant acoustique.

3. Atténuateur sonore selon la revendication 2, **caractérisé en ce que** les extrémités de la pièce de tuyau souple tressée ou tricotée sont soudées, de telle manière qu'il se forme une partie de tuyau souple sensiblement rectangulaire.

4. Atténuateur sonore selon la revendication 1, 2 ou 3, **caractérisé en ce que** la fibre (2) présente une section transversale en forme de croix.

5. Atténuateur sonore selon la revendication 1, 2 ou 3, **caractérisé en ce que** la fibre (4) présente une section transversale en forme d'étoile.

6. Atténuateur sonore selon la revendication 1, 2 ou 3, **caractérisé en ce que** la fibre présente une section transversale en forme d'étoile irrégulière.

7. Atténuateur sonore selon la revendication 1, 2 ou 3, **caractérisé en ce que** la fibre (8) est dotée d'un profilage de surface ou d'une structure de surface en direction longitudinale.

8. Atténuateur sonore selon la revendication 7, **caractérisé en ce que** le profilage de surface ou la structure de surface (10) est réalisé (e) sous la forme d'amincissements (12) et de surépaisseurs (14) qui se suivent de la section transversale de la fibre.

9. Atténuateur sonore selon la revendication 8, **caractérisé en ce que** le profilage de surface ou la structure de surface (10) est de forme régulière ou irrégulière.

10. Atténuateur sonore selon la revendication 1, 2 ou 3, **caractérisé en ce que** la fibre (16, 18) présente, en plus du contour de section transversale profilé, un profilage supplémentaire (20, 22) en direction longitudinale (16).

11. Atténuateur sonore selon la revendication 10, **caractérisé en ce que** le profilage longitudinal (20, 22) est réalisé en forme d'ondes ou en forme de zigzag.
